# EUROPÄISCHE PATENTANMELDUNG

(11) **EP 1 801 138 A1**
(43) Veröffentlichungstag der Anmeldung: **27.06.2007**
(21) Anmeldenummer: 05112960.9
(22) Anmeldetag: 23.12.2005
(51) Int. Cl.: C08G 18/28, C09J 175/04

(54) **Feuchtigkeitshärtende Heissschmelzklebstoffe umfassend mindestens ein silanfunktionelles Polyurethanprepolymer**

(71) Anmelder: Sika Technology AG, 6340 Baar (CH)
(72) Erfinder: Krause, Sven, 21037, Hamburg (DE); Paschkowski, Kai, 21635, Jork (DE); Burckhardt, Urs, 8057, Zürich (CH)
(74) Vertreter: Isler, Jörg

(57) **Zusammenfassung**

Die vorliegende Erfindung betrifft feuchtigkeitshärtende Heissschmelzklebstoff-Zusammensetzungen, welche mindestens ein silanfunktionelles Polyurethanprepolymer der Formel (I) umfassen.

Die Zusammensetzungen weisen weder Erhitzen noch Aushärten Blasen auf und zeichnen sich durch eine ausserordentliche Viskositätsstabilität bei hohen Temperaturen aus.

Deshalb eignen sich diese Heissschmelzklebstoffe insbesondere für die industrielle Fertigung und insbesondere von transparenten Materialien.

## Beschreibung

### Technisches Gebiet

Die Erfindung betrifft das Gebiet der feuchtigkeitshärtenden Heissschmelzklebstoffe.

### Stand der Technik

Heissschmelzklebstoffe (Hotmelts) sind bekannte Klebstoffe. Derartige Klebstoffe sind bei Raumtemperatur feste und lösungsmittelfreie Klebstoffe, welche zur Applikation aufgeschmolzen und als Schmelze auf das zu verklebende Substrat aufgetragen werden. Im Gegensatz zu den sogenannten Warmschmelzklebstoffen (Warmmelts), welche pastöse Klebstoffe darstellen und bei leicht erhöhten Temperaturen bis typischerweise 60 °C appliziert werden, erfolgt die Applikation der Heissschmelzklebstoffe bei Temperaturen ab 85°C. Durch die Abkühlung bedingt, verfestigen sich die Klebstoffe. Klassische Heissschmelzklebstoffe sind nicht reaktive Klebstoffe, wodurch diese bei Erwärmung wieder erweichen bzw. schmelzen und sich deshalb für einen Einsatz bei erhöhter Temperatur nicht eignen. Zudem neigen klassische Heissschmelzklebstoffe oft auch bei Temperaturen weit unterhalb des Erweichungspunkts zum Kriechen (kalter Fluss).

Diese Nachteile wurden bei den sogenannten reaktiven Heissschmelzklebstoffen durch das Einbringen von reaktiven, zur Vernetzung führenden Gruppen in die Polymerstruktur weitgehend behoben. Als reaktive Gruppen haben sich insbesondere Isocyanat-Gruppen als sehr geeignet erwiesen. Durch das Abkühlen erfolgt zuerst der Aufbau der für Heissschmelzklebstoffe typischen Frühfestigkeit. Anschliessend erfolgt eine Vernetzung der Polymere durch die Reaktion der Isocyanat-Gruppen mittels Feuchtigkeit. Durch diese Vernetzung bedingt, sind derartige Klebstoffe auch bei erhöhter Temperatur einsetzbar.

Derartige reaktive Polyurethan-Heissschmelzklebstoffe sind bekannt, beispielsweise aus EP-A-0 244 608 oder US 5,155,180 oder EP-A-1 036 103 und werden kommerziell breit eingesetzt.

Nachteilig an den Isocyanatgruppen aufweisenden feuchtigkeitshärtenden Heissschmelzklebstoffen ist, dass sie vielfach zu starker Blasenbildung, insbesondere bei erhöhter Feuchtigkeit und/oder Temperatur, führen. Derartige Blasen sind jedoch meist unerwünscht, insbesondere wenn es sich um sichtbare Verklebungen handelt, wie sie beispielsweise bei Verpackungsanwendungen vielfach auftreten.

Silanfunktionelle Polyurethane werden schon länger als feuchtigkeitshärtende Kleb- und Dichtstoffe verwendet. Diese silanfunktionellen Polyurethane enthalten als reaktive Gruppen Silangruppen und werden typischerweise durch die Umsetzung von Isocyanatgruppen aufweisenden Polyurethanprepolymeren mit Aminosilanen hergestellt. So hergestellte Polyurethanklebstoffe weisen jedoch den grossen Nachteil auf, dass die Viskosität des Klebstoffes bei längerem Erwärmen unvermittelt stark ansteigen kann. EP-A-0 202 491 erwähnt Silan-funktionalisierte Polyester-Schmelzklebstoffe, bei denen ein Addukt aus einem Polyesterpolyol und einem Diisocyanat mit einem Amino- oder Mercaptosilan umgesetzt oder ein Addukt aus einem Amino- oder Mercaptosilan und einem Diisocyanat mit einem Polyesterpolyol umgesetzt werden. EP-A-0 371 370 offenbart unter Feuchtigkeitseinwirkung nachvernetzende Schmelzklebstoffe, welche terminale Alkoxysilan- und/oder NCO-Gruppen aufweisen. Weiterhin offenbart EP-A-0 371 370, dass diese Alkoxysilanendgruppen über Mercaptosilan oder über eine Reihe von Aminosilanen eingeführt werden können. Weder EP-A-0 371 370 noch EP-A-0 202 491 differenzieren zwischen Aminosilanen und Mercaptosilanen zur Funktionalisierung des Polymers.

So hergestellte Polymere weisen jedoch den grossen Nachteil auf, dass deren Viskosität bei längerem Erwärmen unvermittelt stark ansteigen kann.

Ein derartiger Anstieg der Viskosität bei erhöhter Temperatur ist sehr nachteilig, insbesondere bei Anwendungen, bei welchem der Klebstoff über längere Zeit bei der Applikationstemperatur verweilt. Derartige Anwendungen kommen beispielsweise in der industriellen Fertigung häufig vor.

### Darstellung der Erfindung

Aufgabe der vorliegenden Erfindung ist es daher, feuchtigkeitshärtende Heissschmelzklebstoffe zur Verfügung zu stellen, die weder beim Erhitzen und Aushärten zu Blasen noch beim länger andauerndem Lagern bei der Applikationstemperatur zu einem starken Anstieg der Viskosität führen.

Überraschenderweise wurde gefunden, dass die Aufgabe mit feuchtigkeitshärtenden Heissschmelzklebstoffzusammensetzungen gemäss Anspruch 1 gelöst werden kann.

Sie eignen sich insbesondere für das Verkleben von transparenten Materialien, insbesondere für das Verkleben von Glas und Scheiben oder von Klarsichtverpackungen. Die Zusammensetzungen härten ohne Blasen aus und verfügen überraschenderweise auch bei hohen Temperaturen über eine sehr gute Haltbarkeit (Viskositätsstabilität).

Es hat sich weiterhin gezeigt, dass durch die Verwendung von Mercaptosilanen der Formel (II) silanfunktionelle Polyurethanprepolymere aus Isocyanatgruppen-haltige Polyurethanprepolymere erhalten werden können, welche die Haltbarkeit (Viskositätsstabilität) der Heissschmelzklebstoffe bei hohen Temperaturen stark verbessert werden kann. Des Weiteren hat sich gezeigt, dass die Verwendung von silanfunktionellen Polyurethanprepolymeren der Formel (I) in Heissschmelzklebstoffen zur Verbesserung der Haltbarkeit (Viskositätsstabilität) von feuchtigkeitshärtenden Heissschmelzklebstoffen bei hohen Temperaturen führt.

Weitere Aspekte der Erfindung sind ein Verfahren zur Verklebung gemäss Anspruch 11, sowie ein durch dieses Verfahren erhaltener Artikel gemäss Anspruch 17.

Weitere Ausführungsformen sind Gegenstand der abhängigen Ansprüche.

### Wege zur Ausführung der Erfindung

Gegenstand der Erfindung sind feuchtigkeitshärtende Heissschmelzklebstoffzusammensetzungen umfassend mindestens ein silanfunktionelles Polyurethanprepolymer der Formel (I) 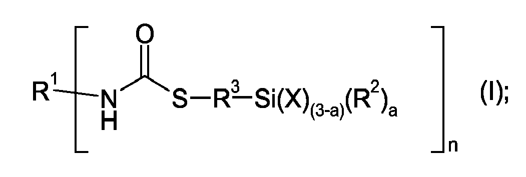 wobei
R¹ für einen n-wertigen organischen Rest eines Prepolymers **P,** welches aus mindestens einem Polyol und mindestens einem Polyisocyanat hergestellt wird und mindestens n Isocyanatgruppen aufweist,
nach Entfernung von n Isocyanatgruppen steht;
R² für eine Alkylgruppe mit 1 bis 10 C-Atomen steht;
R³ für eine lineare oder verzweigte Alkylengruppe mit 1 bis 10 C-Atomen steht;
X für einen hydrolysierbaren Rest steht;
a für einen Wert von 0, 1 oder 2 steht;
n für einen Wert von 2 oder mehr steht,
und wobei das Prepolymer P bei Raumtemperatur fest ist und keine weitere Silangruppe aufweist.

Die Vorsilbe "Poly" in Substanzbezeichnungen, wie "Polyol" oder "Polyisocyanat" weist im vorliegenden Dokument darauf hin, dass die jeweilige Substanz formal mehr als eine der in ihrer Bezeichnung vorkommenden funktionellen Gruppe pro Molekül enthält.

Der Begriff "Silangruppe" bezeichnet im vorliegenden Dokument eine über ein Siliciumatom an einen organischen Rest gebundene Gruppe, welche hydrolysierbar ist, das heisst eine bis drei hydrolysierbare Reste aufweist. Bei der Hydrolyse der Silangruppe, beispielsweise durch Kontakt mit Luftfeuchtigkeit, bilden sich Silanolgruppen (Si-OH-Gruppen) und, durch nachfolgende Kondensationsreaktionen der Silanolgruppen, Siloxangruppen (Si-O-Si-Gruppen).

Der Begriff "Silan" bezeichnet niedermolekulare organische Verbindungen, welche mindestens eine Silangruppe tragen. Der Begriff "silanfunktionell" bezeichnet Verbindungen, insbesondere Polymere, die Silangruppen aufweisen.

Als "hydrolysierbarer Rest" werden solche Reste an einer Silangruppe verstanden, welche durch Wasser in einer Hydrolysereaktion integral vom Siliciumatom verdrängt und dort formal durch eine Hydroxylgruppe ersetzt werden. Durch die Hydrolysereaktion wird der hydrolysierbare Rest zu einer niedermolekularen Verbindung protoniert, die organisch oder anorganisch sein kann.

Die hydrolysierbaren Reste X im silanfunktionellen Polyurethanprepolymer der Formel (I) sind vor allem diejenigen, die in der Silikonchemie üblich sind, insbesondere diejenigen, welche ausgewählt sind aus der Gruppe bestehend aus der Formel (X-1), (X-2), (X-3), (X-4), (X-5), (X-6), (X-7) und (X-8).

-Cl (X-1)

-Br (X-2)

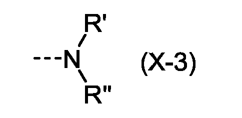

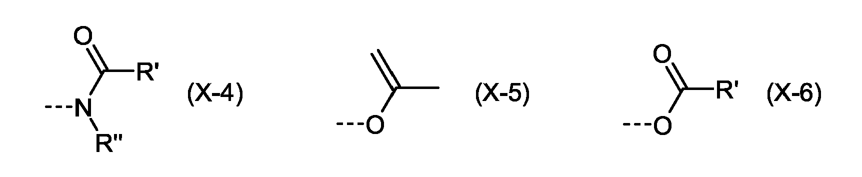

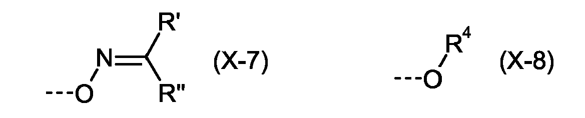

wobei R' und R" unabhängig voneinander für Alkyl oder Aryl stehen und R⁴ für eine Alkylgruppe mit 1 bis 10 C-Atomen, welche gegebenenfalls 1 oder 2 Ether-Sauerstoffe enthält, insbesondere für eine Alkylgruppe mit 1 bis 4 C-Atomen, steht. Besonders bevorzugt ist der hydrolysierbare Rest X eine Alkoxygruppe -OR⁴.

In einer speziellen Ausführung können zwei Alkoxygruppen -OR⁴ zusammen für eine Alkylendioxy-Gruppe -OR⁵O- stehen, welche mit dem Siliciumatom einen fünf- oder sechsgliedrigen Ring bilden, wobei R⁵ für eine Alkylengruppe mit 2 bis 10, insbesondere 2 oder 3, C-Atomen steht.

Es ist wichtig, dass das Prepolymer P keine weitere Silangruppe aufweist. Insbesondere ist es wichtig, dass es keine solchen Silangruppen aufweist, wie sie entstehen, wenn ein Aminosilan mit einer NCO-Gruppe im Prepolymer P reagiert.

Silanbezeichnungen mit funktionellen Gruppen als Präfixen, wie beispielsweise "Aminosilan" oder "Mercaptosilan", bezeichnen Silane, welche die genannte funktionelle Gruppe am organischen Rest als Substituenten tragen.

Es hat sich als günstig erwiesen, wenn R³ für Propylen steht.

Weiterhin werden als hydrolysierbaren Rest X die Reste -OMethyl, -OEthyl oder -O-isoPropyl, insbesondere -OMethyl, bevorzugt.

Es hat sich gezeigt, dass es vorteilhaft ist, wenn drei hydrolysierbare Reste am jeweiligen Siliziumatom im silanfunktionellen Polyurethanprepolymer der Formel (I) vorliegen, das heisst, dass für a der Wert 0 bevorzugt ist.

Das Prepolymer P wird aus mindestens einem Polyol und mindestens einem Polyisocyanat hergestellt.

Als Polyole sind Polyetherpolyole, Polyesterpolyole und Polycarbonatpolyole bevorzugt.

Als Polyetherpolyole, auch Polyoxyalkylenpolyole genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignete Polyetherpolyole sind Polyoxyalkylendiole oder Polyoxyalkylentriole, insbesondere Polyoxyethylendiole oder Polyoxyethylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxypropylendiole und -triole mit einem Molekulargewicht von 400 bis 8'000 g/mol.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter 'Molekulargewicht' oder 'Molgewicht' versteht man im vorliegenden Dokument stets das Molekulargewichtsmittel Mₙ.

Als meist geeignete Polyetherpolyole gelten Diole mit einem Ungesättigtheitsgrad tiefer als 0.02 mEq/g und mit einem Molekulargewicht im Bereich von 7000 bis 30'000, insbesondere zwischen 10'000 und 25'000 g/mol. Beispielsweise werden derartige Polyether unter dem Handelsnamen Acclaim® von Bayer vertrieben.

Als Polyesterpolyole sind insbesondere jene geeignet, welche hergestellt sind aus zwei- bis dreiwertigen, bevorzugt zweiwertigen, Alkoholen, wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton.

Besonders geeignete Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol. Die Polyesterpolyole weisen bevorzugt ein Molekulargewicht von 1500 bis 15'000 g/mol, insbesondere von 1500 bis 8000 g/mol, bevorzugt von 2000 bis 5500 g/mol, auf.

Besonders geeignete kristalline oder teilkristalline Polyesterpolyole sind Adipinsäure/Hexandiol-Polyester und Dodecandicarbonsäure/Hexandiol-Polyester.

Als Polycarbonatpolyole geeignet sind jene, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Als Polyole bevorzugt sind Diole, insbesondere Polyetherdiole, Polyesterdiole und Polycarbonatdiole.

Als Polyole besonders bevorzugt sind Polyesterdiole, insbesondere eine Mischung eines amorphen und eines kristallinen oder teilkristallinen Polyesterdiols.

Ein Polyisocyanat enthält zwei oder mehrere NCO-Gruppen und beschreibt im vorliegenden Dokument jeweils eine niedermolekulare Verbindung mit einem Molekulargewicht von unter 1000 g/mol.

Beispiele für derartige Polyisocyanate sind aromatische Polyisocyanate, wie 2,4- und 2,6-Toluylendiisocyanat (TDI) und beliebige Gemische dieser Isomeren, 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, Naphthalin-1,5-diisocyanat (NDI), 3,3'-Dimethyl-4,4'-düsocyanatodiphenyl (TODI), Oligomere und Polymere der vorgenannten Isocyanate, sowie beliebige Mischungen der vorgenannten Isocyanate. Besonders bevorzugt als aromatische Polyisocyanate sind MDI und TDI.

Weiter Beispiele für derartige Polyisocyanate sind aliphatische und cycloaliphatische Polyisocyanate, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyana-to-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (mund p-XDI), m- und p-Tetramethyl-1,3- und -1,4-xylylendiisocyanat (m- und p-TMXDI).

Für das Formulieren von lichtstabilen Zusammensetzungen werden bevorzugt aliphatische und cycloaliphatische Polyisocyanate eingesetzt.

Insbesondere handelt es sich beim Polyisocyanat um ein Diisocyanat mit einem Molekulargewicht von weniger als 400 g/mol.

Die Herstellung des Prepolymers P erfolgt in einer bekannten Art und Weise direkt aus den Polyisocyanaten und den Polyolen, oder durch schrittweise Adduktionsverfahren, wie sie auch als Kettenverlängerungsreaktionen bekannt sind.

Wesentlich ist, dass die Prepolymere P freie Isocyanat-Gruppen aufweisen und bei Raumtemperatur fest sind. Die Anzahl der Isocyanat-Gruppen ist sehr abhängig von den gewünschten Endeigenschaften des ausgehärteten Klebstoffes. In einer bevorzugten Ausführungsform wird das Polyurethanprepolymer über eine Reaktion von mindestens einem Polyisocyanat und mindestens einem Polyol, vorzugsweise aus einem amorphen und einem kristallinen Polyesterpolyol, mit einem stöchiometrischen Überschuss an Isocyanat-Gruppen hergestellt.

Das Prepolymer P weist ein Molekulargewicht von vorzugsweise über 2000 g/mol, insbesondere ein solches zwischen 2000 und 50'000 g/mol, bevorzugt ein solches zwischen 4000 und 30'000 g/mol, auf. Weiterhin weist das Prepolymer P n Isocyanat-Gruppen auf. Je nach Funktionalität der eingesetzten Polyole und Polyisocyanate nimmt n einen Wert von 2 oder höher an. Es ist von Vorteil, wenn n einen Wert von 2 bis 4 aufweist. In einer bevorzugten Ausführungsform steht n für 2. Es ist dem Fachmann klar, dass die eingesetzten Polyole und Polyisocyanate üblicherweise Mischungen mit unterschiedlichen Funktionalitäten eingesetzt werden. Das heisst, dass beispielsweise ein technisches "Diol" in Wirklichkeit einerseits neben dem Diol auch noch Monole enthält, so dass die mittlere Funktionalität nicht 2 sondern weniger als 2 beträgt. Andererseits können technische "Diole" auch Zusätze von Triolen enthaöten, so dass die mittlere Funktionalität nicht 2 sondern mehr als 2 beträgt.

Die Herstellung des silanfunktionellen Polyurethanprepolymers der Formel (I) erfolgt vorzugsweise durch die Reaktion eines Prepolymeren **P**, wie es soeben beschrieben wurde, mit einem Mercaptosilan der Formel (II)

HS-R³-Si(X)₍₃₋ₐ₎(R²)ₐ (II)

wobei die Reste die bereits für Formel (I) beschriebenen Bedeutungen und Bevorzugungen aufweisen.

Geeignete Mercaptosilane sind beispielsweise Mercaptomethyl-trimethoxysilan, Mercaptomethyl-triethoxysilan, Mercaptomethyl-dimethoxymethylsilan, Mercaptomethyl-diethoxymethylsilan, 3-Mercaptopropyl-trimethoxysilan, 3-Mercaptopropyl-triethoxysilan, 3-Mercaptopropyl-triisopropoxysilan, 3-Mercaptopropyl-methoxy(1,2-ethylendioxy)-silan, 3-Mercaptopropyl-methoxy(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan, 4-Mercapto-3,3-dimethylbutyl-trimethoxysilan.

Als Mercaptosilane sind 3-Mercaptopropyl-trimethoxysilan und 3-Mercaptopropyl-triethoxysilan, insbesondere 3-Mercaptopropyl-trimethoxysilan, bevorzugt.

Die Reaktion des Isocyanatgruppen aufweisenden Prepolymers P mit dem Mercaptosilan erfolgt in bekannter Art und Weise.

Je nach verwendeter Menge Mercaptosilan reagieren alle Isocyanat-gruppen des Prepolymers **P** oder es bleiben noch Isocyanatgruppen übrig. Im ersten Fall wird das Mercaptosilan stöchiometrisch oder überstöchiometrisch eingesetzt und es entsteht ein silanfunktionelles Polyurethanprepolymer der Formel (I), welches keine Isocyanatgruppen aufweist, das heisst, dass alle n Isocyanatgruppen des Prepolymers **P** abreagiert sind. Im zweiten Fall wird das Mercaptosilan unterstöchiometrisch eingesetzt und es entsteht ein silanfuktionelles Polyurethanprepolymer der Formel (I), welches neben den Silangruppen noch Isocyanatgruppen aufweist, das heisst, dass nicht alle n Isocyanatgruppen des Prepolymers P abreagiert sind.

Es kann bei gewissen Anwendungen von technischem Vorteil sein, wenn das silanfunktionelle Polyurethanprepolymer der Formel (I) noch Isocyanatgruppen aufweist.

Aus toxikologischen Gründen ist es von Vorteil, wenn das silanfunktionelle Polyurethanprepolymer der Formel (I) keine Isocyanatgruppen aufweist.

Bevorzugt weist das silanfunktionelle Polyurethanprepolymer der Formel (I) keine Isocyanatgruppen auf.

Die feuchtigkeitshärtende Heissschmelzklebstoffzusammensetzung kann weitere Zusätze enthalten wie Weichmacher, Füllstoffe, Haftvermittler, UV-Absorptionsmittel, UV- oder Wärmestabilisatoren, Antioxidantien, Flammschutzmittel, optische Aufheller, Katalysatoren, Farbpigmente oder Farbstoffe. Als Katalysatoren sind insbesondere solche, welche die Hydrolyse und/oder Vernetzung von Silangruppen katalysieren, geeignet. Solche Katalysatoren umfassen beispielsweise Titanate, Organozinnverbindungen wie Dibutylzinndilaurat und Dibutylzinndiacetylacetonat, Bismut-organische Verbindungen oder Bismut-Komplexe, aminogruppenhaltige Verbindungen, beispielsweise 1,4-Diazabicyclo[2.2.2]octan oder 2,2'-Dimorpholinodiethylether.

In einer bevorzugten Ausführungsform ist die Heissschmelzklebstoffzusammensetzung frei von Russ. Russ wird, insbesondere in der Polyurethanchemie, insbesondere bei konventionellen einkomponentigen Polyurethanklebstoffen oder bei einkomponentigen Polyurethan-Warmmelts, vielfach als Füllstoff zugesetzt, um die Mechanik des Klebstoffes zu verbessern, sowie um die niedrig viskosen Klebstoffe standfest zu machen. In einer weiteren bevorzugten Ausführungsform ist der Klebstoff frei von anorganischen Füllstoffen. Russgefüllte Klebstoffe eignen sich nämlich schlecht für diejenigen Anwendungen, in denen die Ästhetik der Verklebungen als wichtig eingestuft wird, und bei denen zumindest eines der zu verklebenden Substrate durchsichtig oder durchscheinend ist. In der bevorzugten Ausführungsform einer Russ-freien, beziehungsweise einer von anorganischen Füllstoffen freien, Heissschmelzklebstoffzusammensetzung sind derartige Anwendungen jedoch möglich, ohne dass die Mechanik oder Applikation negativ beeinflusst wird.

Wichtig für die Wirkungsweise eines feuchtigkeitshärtenden Heissschmelzklebstoffes ist, dass der Klebstoff aufschmelzbar ist, das heisst, das er bei der Applikationstemperatur eine genügend niedrige Viskosität aufweist, die eine vernünftige Applikation erlaubt, und dass er beim Erkalten schnell fest wird, so dass er schnell Kräfte aufnehmen kann, bereits bevor die Vernetzungsreaktion mit Luftfeuchtigkeit abgeschlossen ist. Es hat sich gezeigt, dass die feuchtigkeitshärtende Heissschmelzklebstoffzusammensetzung bei einer Temperatur von 150°C insbesondere eine Viskosität von weniger als 100'000 mPas, insbesondere von weniger als 50'000 mPas, aufweist und bei 70°C insbesondere eine Viskosität von mehr als 20'000 mPas, insbesondere von mehr als 50'000 mPas, aufweist.

Dem silanfunktionellen Polyurethanprepolymer der Formel (I) können auch anderen Polyurethanprepolymeren zugemischt werden, wodurch die Haltbarkeit (Viskositätsstabilität) bei erhöhter Temperatur des so gebildeten feuchtigkeitshärtenden Heissschmelzklebstoffs verbessert werden kann.

Durch den Einfluss von Feuchtigkeit oder Wasser, insbesondere Luftfeuchtigkeit, hydrolysieren die hydrolysierbaren Reste des silanfunktionellen Polyurethanprepolymers der Formel (I) und führen zur Vernetzung.

Weiterhin umfasst die Erfindung ein Verfahren zur Verklebung von Substrat **S1** mit Substrat **S2.**

Dieses Verfahren umfasst die Schritte
i) Aufheizen einer feuchtigkeitshärtenden Heissschmelzklebstoffzusammensetzung, wie sie vorgängig beschrieben wurde, auf eine Temperatur zwischen 85°C und 200°C, insbesondere zwischen 120°C und 160°C;
ii) Applikation der aufgeheizten feuchtigkeitshärtenden Heissschmelzklebstoffzusammensetzung auf ein Substrat **S1;**
iii) Kontaktieren der applizierten feuchtigkeitshärtende Heissschmelzklebstoffzusammensetzung mit einem zweiten Substrat **S2;**
wobei das zweite Substrat **S2** aus demselben oder unterschiedlichem Material wie das Substrat **S1** besteht.

Anschliessend an den Schritt iii) schliesst sich typischerweise ein Schritt iv) des chemischen Aushärtens der feuchtigkeitshärtenden Heissschmelzklebstoffzusammensetzung mit Luftfeuchtigkeit an. Der Fachmann versteht, dass je nach verwendetem System, Temperatur und Reaktivität des Klebstoffs Vernetzungsreaktionen, und damit das chemische Aushärten, bereits während der Applikation beginnen kann. Der Hauptteil der Vernetzung und damit im engeren Sinn des Terms des chemischen Aushärtens findet jedoch nach der Applikation statt.

Die Substrate **S1** und/oder **S2** können bei Bedarf vor dem Applizieren der Heissschmelzklebstoffzusammensetzung vorbehandelt werden. Derartige Vorbehandlungen umfassen insbesondere physikalische und/oder chemische Reinigungs- und Aktivierungsverfahren, beispielsweise Schleifen, Sandstrahlen, Bürsten, Coronabehandlung, Plasmabehandlung, Beflammen, Anätzen oder dergleichen, oder Behandeln mit Reinigern oder Lösemitteln oder das Aufbringen eines Haftvermittlers, einer Haftvermittlerlösung oder eines Primers.

Die Substrate **S1** und **S2** können eine Vielzahl von Materialien darstellen. Insbesondere eignen sich Kunststoffe, organische Materialien wie Leder, Stoffe, Papier, Holz, mit Harz gebundene Holzwerkstoffe, Harz-Texil-Compositewerkstoffe, Glas, Porzellan, Keramik sowie Metalle und Metall-Legierungen, insbesondere lackierte oder pulverbeschichtete Metalle und Metall-Legierungen.

Als Kunststoffe eignen sich insbesondere Polyvinylchlorid (PVC), Acrylonitril-Butadien-Styrol-Copolymere (ABS), SMC (Sheet Molding Composites), Polycarbonat (PC), Polyamid (PA), Polyester (PE), Polyoxymethylen (POM), Polyolefine (PO), insbesondere Polyethylen (PE) oder Polypropylen (PP), bevorzugt mit Plasma, Corona oder Flammen oberflächenbehandeltes PP oder PE.

Als bevorzugte Materialien für die Substrate **S1** und **S2** gelten transparente Materialien, insbesondere transparente Kunststofffolien. Ein anderes bevorzugtes transparentes Material ist Glas, insbesondere in Form einer Scheibe.

Die feuchtigkeitshärtende Heissschmelzklebstoffzusammensetzung wird insbesondere in einem industriellen Fertigungsprozess eingesetzt.

Insbesondere eignet sich die feuchtigkeitshärtende Heissschmelzklebstoffzusammensetzung für Verklebungen, in welchen die Verklebungsstelle sichtbar ist. So eignet sie sich einerseits insbesondere für die Verklebung von Glas, insbesondere im Fahrzeug- und Fensterbau. Andererseits eignet sie sich insbesondere für das Verkleben von Klarsichtverpackungen.

Der Klebstoff härtet im Wesentlichen blasenfrei aus. Typische Dicken von Verklebungen sind 10 Mikrometer oder mehr. Insbesondere beträgt die Verklebungsdicke zwischen 10 Mikrometer und 1000 Mikrometer, vor allem zwischen 80 Mikrometer und 500 Mikrometer. Es hat sich gezeigt, dass auch in Verklebungsschichtdicken von über 80 Mikrometer keine Blasen auftreten.

Aus dem Verklebungsverfahren resultierten Artikel. Derartige Artikel sind einerseits insbesondere Artikel der Transportmittel-, Möbel- oder Textilbranche. Als Transportmittelbranche wird insbesondere die Automobilbranche bevorzugt.

Beispielhafte derartige Artikel sind Automobil-Innenausstattungsteile, wie Dachhimmel, Sonnenblende, Instrumententafel, Türseitenteil, Hutablage und dergleichen; Holzfaserwerkstoffe aus dem Duschen- und Badbereich; Möbel-Dekorfolien, Membranfolien mit Textilien wie Baumwolle, Polyesterfolien im Bekleidungsbereich oder Textilien mit Schäumen für Autoausstattungen.

Andererseits sind derartige Artikel insbesondere Artikel aus der Verpackungsbranche. Insbesondere handelt es sich bei einem derartigen Artikel um eine Klarsichtverpackung.

Ein weiterer Aspekt der vorliegenden Erfindung stellt die Verwendung von Mercaptosilanen der bereits beschriebenen Formel (II) zur Modifizierung von Isocyanatgruppen-haltigen Polyurethanprepolymeren zur Verbesserung der Haltbarkeit (Viskositätsstabilität) eines silanfunktionellen unausgehärteten Heissschmelzklebstoffes dar.

HS-R³-Si(X)₍₃₋ₐ₎(R²)ₐ (**II)**.

wobei die Reste die bereits für Formel (I) beschriebenen Bedeutungen und Bevorzugungen aufweisen.

Als Mercaptosilane sind 3-Mercaptopropyl-trimethoxysilan und 3-Mercaptopropyl-triethoxysilan, insbesondere 3-Mercaptopropyl-trimethoxysilan, bevorzugt.

Somit können unter Verwendung von Mercaptosilanen der Formel (II) silanfunktionelle Polyurethanprepolymere aus Isocyanatgruppen-haltige Polyurethanprepolymeren erhalten werden können, welche die Haltbarkeit (Viskositätsstabilität) der Heissschmelzklebstoffe bei hohen Temperaturen stark verbessert werden kann, insbesondere im Vergleich zu den entsprechenden silanfunktionellen Polyurethanprepolymeren, welche aus Isocyanatgruppen-haltige Polyurethanprepolymeren und Aminosilanen erhalten werden. Des Weiteren hat sich gezeigt, dass die Verwendung von silanfunktionellen Polyurethanprepolymeren der Formel (I) in Heissschmelzklebstoffen zur Verbesserung der Haltbarkeit (Viskositätsstabilität) von feuchtigkeitshärtenden Heissschmelzklebstoffen bei hohen Temperaturen führt.

Ein weiterer Aspekt der vorliegenden Erfindung stellt die Verwendung eines silanfunktionellen Polyurethanprepolymeren der Formel (I), wie es bereits vorher beschrieben worden ist, in Heissschmelzklebstoffen zur Verbesserung der Haltbarkeit (Viskositätsstabilität) des unausgehärteten Klebstoffs, dar.

Es wurde überraschenderweise festgestellt, dass ein auf silanfunktionellen Polyurethanprepolymeren der Formel (I) basierender Heissschmelzklebstoff bei erhöhter Temperatur über eine bedeutend bessere Viskositätsstabilität verfügt, als ein entsprechender Klebstoff des Standes der Technik, welcher auf silanfunktionellen Polyurethanprepolymeren basiert, die aus Isocyanatgruppen-haltigen Polyurethanprepolymeren und Aminosilanen erhalten werden. Das Phänomen, dass die Erhöhung der Viskosität mit der Lagerzeit bei hoher Temperatur, welche insbesondere der Applikationstemperatur entspricht, d.h. typischerweise bei einer Lagertemperatur zwischen 120 °C und 160°C, nicht oder nur sehr viel schwächer beziehungsweise langsamer ansteigt, wird in diesem Dokument mit dem Begriff "Haltbarkeit" oder "Viskositätsstabilität" bezeichnet.

Weiterhin wurde zusätzlich zur Blasenfreiheit und verbesserten Viskositätsstabilisierung gefunden, dass die UV-Stabilität, insbesondere die Vergilbung, der feuchtigkeitshärtenden Heissschmelzklebstoffzusammensetzungen durch den Einsatz von cycloaliphatischen Polyisocyanaten bei der Herstellung des Prepolymers **P**, bzw. des silanfunktionellen Polyurethanprepolymers der Formel (I), stark reduziert werden konnte.

### Beispiele

Es wurden im Folgenden die in Tabelle 1 verwendeten Substanzen und Abkürzungen verwendet.

**Tabelle 1: Verwendete Abkürzungen**

| | |
|---|---|
| A189 | 3-Mercaptopropyltrimethoxysilan |
| A1110 | 3-Aminopropyltrimethoxysilan |
| A1170 | Bis(3-trimethoxysilylpropyl)amin |
| TMSDEE | N-(3-Trimethoxysilyl-propyl)-amino-bernsteinsäure-diethylester |
| TESDEE | N-(3-Triethoxysilyl-propyl)-amino-bernsteinsäure-diethylester |
| MDI | 4,4'-Diphenylmethandiisocyanat (MDI) |
| H-MDI | Perhydro-2,4'- und -4,4'-diphenylmethandiisocyanat |

### Herstellung von Prepolymeren P

### Prepolymer P1

Es wurde eine 1:1 (w:w) - Polyester-Mischung von Dynacoll® 7150 (Degussa) und Dynacoll® 7250 (Degussa) in einem 1 Liter-Reaktionsgefäss mit Antihaftbeschichtung und einem 4-Hals-Planschliffdeckel vorgelegt. Dieses wurde in einem Ölbad mit Temperatursteuerung bei 120-125°C 4 h lang aufgeschmolzen.

Das so erhaltene flüssige Polyolgemisch wurde eine Stunde lang bei gehaltener Temperatur unter Rühren im Hochvakuum entwässert.

Darauf wurde MDI im Molverhältnis NCO/OH = 2:1 zum Polyol in das Reaktionsgefäss zugegeben und 2 h unter Rühren bei gehaltener Temperatur umgesetzt. Das derart hergestellte Prepolymer ***P1*** wies einen NCO-Gehalt von 2.2% und eine Viskosität von 15'500 mPas bei 130 °C auf.

### Prepolymer P2

Das Prepolymer ***P2*** wurde in analoger Weise wie ***P1*** hergestellt, mit der Ausnahme, dass für ***P2*** die Polyestermischung stöchiometrisch durch das Polyetherpolyol Desmophen® 4028 BD (Bayer) ersetzt wurde. Das derart hergestellte Prepolymer ***P2*** wies einen NCO-Gehalt von 2.05% und eine Viskosität von 1875 mPas (10 UpM) bei 70°C auf.

### Herstellung von silanfunktionellen Polyurethanprepolymeren

Das oben beschriebene Prepolymer ***P1,*** beziehungsweise ***P2,*** wurde mit dem entsprechenden stöchiometrisch (1 Silan reagiert mit 1 NCO-Gruppe) eingesetzten Silan gemäss Tabelle 2 und 0.2 Gew.-% Dibutylzinndilaurat (DBTL) als Katalysator, bezogen auf das Prepolymer, versetzt und nach 1 h Reaktionszeit in Tuben oder Kartuschen abgefüllt. Dadurch war eine Lagerung unter Ausschluss von Feuchtigkeit gewährleistet.

**Tabelle 2. Zusammensetzungen.**

| | ***Ref.1*** | ***Ref.2*** | ***Ref.3*** | ***Ref.4*** | ***1*** | ***2*** | ***Ref.5*** |
|---|---|---|---|---|---|---|---|
| Silan | A1110 | TMSDEE | TESDEE | A1170 | A189 | A189 | TMSDEE |
| Prepolymer | ***P1*** | ***P1*** | ***P1*** | ***P1*** | ***P1*** | ***P2*** | ***P2*** |

Es zeigte sich, dass das Vergleichsbeispiel ***Ref.1*** bei der Herstellung gelierte. Alle anderen Zusammensetzungen konnten ohne Gelierung hergestellt werden.

### Haltbarkeit (Viskositätsstabilität)

Die Viskositätsmessung wurde kontinuierlich bei der jeweiligen Temperatur durchgeführt.

Zur Messung der Haltbarkeit (Viskositätsstabilität) wurden die Viskosität η [mPas] der jeweiligen Zusammensetzung mittels Rheomat (Brookfield, Thermosel, Spindel 27, Scherrate 1 min⁻¹) nach einer Lagerzeit t_{L} bei der jeweiligen Temperatur T gemessen.

**Tabelle 3: Viskositätsstabilität bei unterschiedlichen Temperaturen. n.m.= nicht messbar, n.d.=nicht gemessen.**

| | ***Ref.2*** | | | ***Ref.4*** | | | ***1*** | | |
|---|---|---|---|---|---|---|---|---|---|
| T[°C] | 120 | 140 | 160 | 120 | 140 | 160 | 120 | 140 | 160 |
| η | | | | | | | | | |
| t_{L}=2h | 10000 | 2500 | 1200 | n.d. | 17700 | 6000 | 107300 | 38500 | 7300 |
| t_{L}=4h | 8000 | 2200 | 90000 | n.d. | 18600 | 9100 | 110300 | 39000 | 7600 |
| t_{L}=6h | 7000 | 2200 | n.m. | n.d. | 20000 | 92000 | 113300 | 39800 | 8100 |
| t_{L}=8h | 6500 | 2600 | n.m. | n.d. | 21600 | n.m. | 116300 | 40300 | 8600 |
| t_{L}=12h | 6100 | 20200 | n.m. | n.d. | 26700 | n.m. | 122300 | 41600 | 9300 |
| t_{L}=18h | 6200 | n.m. | n.m. | n.d. | 40700 | n.m. | 132000 | 43600 | 10000 |

**Tabelle 4: Viskositätsstabilität bei 160°C n.m.= nicht messbar.**

| | ***Ref.2*** | ***Ref.3*** | ***Ref.5*** | *1* | *2* |
|---|---|---|---|---|---|
| T[°C] | 160 | 160 | 160 | 160 | 160 |
| η | | | | | |
| t_{L}=2h | 1200 | 800 | 300 | 7300 | 600 |
| t_{L}=4h | 90000 | 2700 | 700 | 7600 | 1200 |
| t_{L}=4.5h | n.m. | 43300 | 1000 | 8100 | 1200 |
| t_{L}=6h | n.m. | n.m. | 2700 | 8100 | 1000 |
| t_{L}=8h | n.m. | n.m. | 16400 | 8600 | 600 |
| t_{L}=9h | n.m. | n.m. | 41400 | 8800 | 600 |
| t_{L}=12h | n.m. | n.m. | n.m | 9300 | 700 |
| t_{L}=18h | n.m. | n.m. | n.m. | 10000 | 800 |

**Tabelle 5: Langzeit-Viskositätsstabilität der Zusammensetzung 1 bei einer Lagertemperatur von 160°C.**

| | t_{L}=2h | t_{L}=4h | t_{L}=6h | t_{L}=8h | t_{L}=12h | t_{L}=18h | t_{L}=24h | t_{L}=48h | t_{L}=72h | t_{L}=90h |
|---|---|---|---|---|---|---|---|---|---|---|
| η | 7300 | 7600 | 8100 | 8600 | 9300 | 10000 | 10500 | 13200 | 17400 | 20700 |

Die Ergebnisse der Tabellen 3 bis 5 zeigen, dass die Zusammensetzungen ***1*** und ***2*** sich gegenüber den Referenzbeispielen durch eine ausserordentlich verbesserte Lagerstabilität auszeichnen. Selbst bei 160°C ist der Viskositätsanstieg selbst nach langer Lagerzeit gering, währenddessen die Referenzbeispiele bereits so stark verdickt sind, dass sie nicht mehr messbar sind.

### Blasenbildung

Zur Bestimmung der Blasenbildung wurden Probekörper in Anlehnung an die Herstellung der Prüflinge für die Bestimmung der Shore A Härte hergestellt. Der heisse Klebstoff wurde hierbei mit einer Temperatur von ca. 140 °C in einen Teflonring (2mm Stärke) gefüllt. Der Klebstoff wurde mit einem Gewicht (5kg) auf die Stärke gepresst und abgekühlt. Der abgekühlte Klebstoff wurde anschliessend entformt und bei 20°C und 55% Luftfeuchte ausgehärtet.

Die Blasenbildung erfolgte durch visuelle Beurteilung.

Als Referenz für einen reaktiven Heissschmelzklebstoff wurde das Prepolymer ***P1*** herangezogen.

**Tab.6 Blasenbildung.**

| | |
|---|---|
| ***1*** | keine Blasenbildung |
| ***2*** | keine Blasenbildung |
| ***P1*** | starke Blasenbildung |

### Mechanische Eigenschaften

### Zugfestigkeit

In Anlehnung an DIN 53504 wurden aus einem 500 µm dicken ausgehärteten Film der Zusammensetzung ***1***2 x 12 cm grosse, rechteckige Prüflinge geschnitten. Diese wurden in die Zugprüfmaschine eingespannt (Zwick Z 020) und mit einer Geschwindigkeit von 100 mm/min auseinander gezogen. Gemessen wurde die von der Probe maximal aufgenommene Zugkraft.

### Zugscherfestigkeit

Die Zugscherfestigkeit der Zusammensetzung ***1*** wurde in Anlehnung an DIN EN 1465 auf einer Zugprüfmaschine der Firma Zwick (Z 020) mit einer Prüfgeschwindigkeit von 100 mm/min gemessen. Es wurden zwei Prüfkörper des jeweiligen Substrates verklebt (Überlappung 12 x 25 mm, Klebschichtdicke 2 mm) und getestet.

Die mechanischen Ergebnisse der Zusammensetzung ***1*** sind in Tabelle 7 zusammengestellt.

**Tabelle 7: Mechanische Ergebnisse der Zusammensetzung 1**

| | |
|---|---|
| Zugfestigkeit | 27.3 ± 2.1 MPa |

| Zugscherfestigkeit | |
|---|---|
| Buche | 5.9 MPa (Holzfaserabriss) |
| ABS | 4.5 MPa |
| Polycarbonat | 3.7 MPa |

## Patentansprüche

**1.** Feuchtigkeitshärtende Heissschmelzklebstoffzusammensetzung umfassend mindestens ein
silanfunktionelles Polyurethanprepolymer der Formel (I) 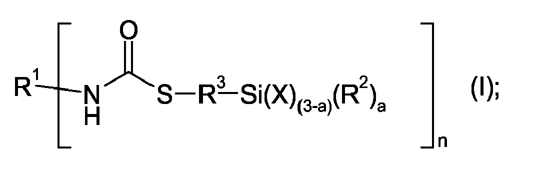 wobei
R¹ für einen n-wertigen organischen Rest eines Prepolymers **P**, welches aus mindestens einem Polyol und mindestens einem Polyisocyanat hergestellt wird und mindestens n Isocyanatgruppen aufweist,
nach Entfernung von n Isocyanatgruppen steht;
R² für eine Alkylgruppe mit 1 bis 10 C-Atomen steht;
R³ für eine lineare oder verzweigte Alkylengruppe mit 1 bis 10 C-Atomen steht;
X für einen hydrolysierbaren Rest steht;
a für einen Wert von 0, 1 oder 2 steht;
n für einen Wert von 2 oder mehr steht,
und wobei das Prepolymer P bei Raumtemperatur fest ist und keine weitere Silangruppe aufweist.

**2.** Feuchtigkeitshärtende Heissschmelzklebstoffzusammensetzung gemäss Anspruch 1, **dadurch gekennzeichnet, dass** R³ für Propylen steht.

**3.** Feuchtigkeitshärtende Heissschmelzklebstoffzusammensetzung gemäss Anspruch 1 oder 2, **dadurch gekennzeichnet, dass** X für OR⁴ steht, wobei R⁴ für eine Alkylgruppe mit 1 bis 10 C-Atomen, welche gegebenenfalls 1 oder 2 Ether-Sauerstoffe enthält, insbesondere für Methyl, Ethyl oder iso-Propyl, bevorzugt Methyl, steht.

**4.** Feuchtigkeitshärtende Heissschmelzklebstoffzusammensetzung gemäss einem der vorhergehenden Ansprüche, **dadurch gekennzeichnet, dass** a für den Wert 0 steht.

**5.** Feuchtigkeitshärtende Heissschmelzklebstoffzusammensetzung gemäss einem der vorhergehenden Ansprüche, **dadurch gekennzeichnet, dass** das Polyol ein Diol, insbesondere ein Polyesterdiol, ist und das Polyisocyanat ein Diisocyanat mit einem Molekulargewicht von weniger als 400 g/mol ist.

**7.** Feuchtigkeitshärtende Heissschmelzklebstoffzusammensetzung gemäss einem der vorhergehenden Ansprüche, **dadurch gekennzeichnet, dass** das silanfunktionelle Polyurethanprepolymer der Formel (I) erhalten wird aus der Reaktion eines mindestens n Isocyanatgruppen aufweisenden Polyurethanprepolymers **P** mit einem Mercaptosilan der Formel (II)
HS-R³-Si(X)₍₃₋ₐ₎(R²)ₐ (**II**).

**8.** Feuchtigkeitshärtende Heissschmelzklebstoffzusammensetzung gemäss einem der vorhergehenden Ansprüche, **dadurch gekennzeichnet, dass** das silanfunktionelle Polyurethanprepolymer der Formel (I) Isocyanat-gruppen aufweist.

**9.** Feuchtigkeitshärtende Heissschmelzklebstoffzusammensetzung gemäss einem der Ansprüche 1 bis 7, **dadurch gekennzeichnet, dass** das silanfunktionelle Polyurethanprepolymer der Formel (I) keine Isocyanatgruppen aufweist.

**10.** Feuchtigkeitshärtende Heissschmelzklebstoffzusammensetzung gemäss einem der vorhergehenden Ansprüche, **dadurch gekennzeichnet, dass** diese bei einer Temperatur von 150°C eine Viskosität von weniger als 100'000 mPas, insbesondere von weniger als 50'000 mPas, und bei einer Temperatur von 70°C eine Viskosität von mehr als 20'000 mPas, insbesondere von mehr als 50'000 mPas, aufweist.

**11.** Verfahren zur Verklebung von Substrat **S1** mit Substrat **S2** umfassend die Schritte
i) Aufheizen einer feuchtigkeitshärtenden Heissschmelzklebstoffzusammensetzung gemäss einem der Ansprüche 1 bis 10 auf eine Temperatur zwischen 85°C und 200°C, insbesondere zwischen 120°C und 160°C;
ii) Applikation der aufgeheizten feuchtigkeitshärtenden Heissschmelzklebstoffzusammensetzung auf ein Substrat **S1;**
iii) Kontaktieren der applizierten feuchtigkeitshärtende Heissschmelzklebstoffzusammensetzung mit einem zweiten Substrat **S2;**
wobei das zweite Substrat **S2** aus demselben oder unterschiedlichem Material wie das Substrat **S1** besteht.

**12.** Verfahren gemäss Anspruch 11, **dadurch gekennzeichnet, dass** an Schritt iii) ein Schritt iv) des chemischen Aushärtens der feuchtigkeitshärtenden Heissschmelzklebstoffzusammensetzung mit Luftfeuchtigkeit anschliesst.

**13.** Verfahren gemäss Anspruch 11 oder 12, **dadurch gekennzeichnet, dass** mindestens eines der Substrate **S1** oder **S2** ein transparentes Material, insbesondere eine transparente Kunststofffolie, ist.

**14.** Verfahren gemäss Anspruch 13, **dadurch gekennzeichnet, dass** mindestens eines der Substrate **S1** oder **S2** ein Glas, insbesondere in Form einer Scheibe, ist.

**15.** Verfahren gemäss einem der Ansprüche 11 bis 14, **dadurch gekennzeichnet, dass** die Verklebung in einem industriellen Fertigungsprozess erfolgt.

**16.** Verfahren gemäss einem der Ansprüche 11 bis 15, **dadurch gekennzeichnet, dass** die Klebstoffschichtdicke 10 Mikrometer bis 1000 Mikrometer, insbesondere 80 Mikrometer bis 500 Mikrometer, beträgt.

**17.** Artikel, welcher nach einem Verklebungsverfahren gemäss einem der Ansprüche 11 bis 16 verklebt wurde.

**18.** Artikel nach Anspruch 17, **dadurch gekennzeichnet, dass** der Artikel eine Klarsichtverpackung ist.

**19.** Artikel nach Anspruch 17, **dadurch gekennzeichnet, dass** der Artikel ein Artikel der Transportmittel-, Möbel- oder Textilbranche ist.

**20.** Verwendung von Mercaptosilanen der Formel (II) zur Modifizierung von Isocyanatgruppen-haltigen Polyurethanprepolymeren zur Verbesserung der Haltbarkeit (Viskositätsstabilität) eines silanfunktionellen unausgehärteten Heissschmelzklebstoffs
HS-R³-Si(X)₍₃₋ₐ₎(R²)ₐ (II)
wobei
R² für eine Alkylgruppe mit 1 bis 10 C-Atomen steht;
R³ für eine lineare oder verzweigte Alkylengruppe mit 1 bis 10 C-Atomen, insbesondere Propylen, steht; und
X für einen hydrolysierbaren Rest steht;
a für einen Wert von 0, 1 oder 2, insbesondere von 0, steht.

**21.** Verwendung gemäss Anspruch 20, **dadurch gekennzeichnet, dass** X für OR⁴ steht, wobei R⁴ für eine Alkylgruppe mit 1 bis 10 C-Atomen, welche gegebenenfalls 1 oder 2 Ether-Sauerstoffe enthält, insbesondere für Methyl, Ethyl oder iso-Propyl, bevorzugt Methyl, steht.

**22.** Verwendung eines silanfunktionellen Polyurethanprepolymeren der Formel (I), wie es in einem der Ansprüche 1 bis 10 beschrieben ist, in Heissschmelzklebstoffen zur Verbesserung der Haltbarkeit (Viskositätsstabilität) des unausgehärteten Heissschmelzklebstoffs.
